# EUROPEAN PATENT APPLICATION

(11) **EP 4 700 928 A1**
(43) Date of publication of application: **25.02.2026**
(21) Application number: 24925003.6
(22) Date of filing: 06.11.2024
(51) Int. Cl.: H01M 50/143, H01M 50/178, H01M 50/211, H01M 50/249

(54) **BATTERY MODULE, AND BATTERY PACK AND VEHICLE INCLUDING SAME**

(30) Priority: 15.02.2024 KR 20240021946
(71) Applicant: LG Energy Solution, Ltd., Seoul 07335 (KR)
(72) Inventor: PARK, Ju-Hun, Daejeon 34122 (KR); JUNG, Hye-Mi, Daejeon 34122 (KR)
(74) Representative: Plasseraud IP
(86) International application number: PCT/KR2024/017438
(87) International publication number: WO 2025/173859

(57) **Abstract**

Disclosed is a battery module, and a battery pack and a vehicle including the same. The battery module includes a battery cell stack in which a plurality of battery cells are stacked; a case in which the battery cell stack is accommodated; and a heat shrinkable member coupled to the battery cell and configured to shrink by heat.

## Description

### TECHNICAL FIELD

This application is based on and claims priority from Korean Patent Application No. 10-2024-0021946, filed on February 15, 2024, with the Korean Intellectual Property Office, the disclosure of which is incorporated herein in its entirety by reference.

The present disclosure relates to a battery module, and a battery pack and a vehicle including the same, and more specifically, to a battery module capable of protecting battery cells from flame or high-temperature gas, and a battery pack and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module in which a case capable of protecting battery cells is provided so that a plurality of battery cells are stacked and inserted into the case, and a battery pack including a plurality of battery modules.

Here, if a flame occurs in at least one of the battery cells inside the case of the battery module, the flame may propagate to other battery cells, causing a thermal runaway phenomenon. In addition, if this thermal runaway phenomenon occurs and the flame leaks to the outside, there is a problem that the driver of an electric vehicle may be burned or put into a dangerous situation.

Alternatively, there is a problem in that the battery module or battery pack is damaged, burned down, or exploded by a chain reaction of flames caused by flame propagation, so it may be impossible to secure the stability of the battery module or battery pack.

### DISCLOSURE

### Technical Problem

The present disclosure is directed to providing a battery module capable of protecting other battery cells in which a flame do not occur when a flame occurs in one battery cell, and a battery pack and a vehicle including the same.

In addition, the present invention is directed to providing a battery module capable of preventing a thermal runaway phenomenon by preventing a flame chain reaction caused by flame propagation, and a battery pack and a vehicle including the same.

In addition, the present invention is directed to providing a battery module that does not normally affect a gas pocket of a battery cell, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a battery cell stack in which a plurality of battery cells are stacked; a case in which the battery cell stack is accommodated; and a heat shrinkable member coupled to the battery cell and configured to shrink by heat.

In an embodiment, the battery cell may be a pouch-type battery cell with a terrace portion formed at a position where an electrode lead is located, and the heat shrinkable member may be coupled to the battery cell at a position close to the terrace portion.

In an embodiment, the heat shrinkable member may surround the terrace portion and the electrode lead.

In an embodiment, the heat shrinkable member may be formed in a band shape to surround a perimeter of the terrace portion, and an open hole may be formed in the heat shrinkable member so that the electrode lead is exposed to an outside.

In an embodiment, when a flame occurs in another adjacent battery cell, the heat shrinkable member may shrink due to heat of the flame to close the terrace portion and the electrode lead.

In an embodiment, the heat shrinkable member may be provided in a pair, and the pair of heat shrinkable members may be coupled to both ends of the battery cell.

In an embodiment, the heat shrinkable member may be fitted into and coupled to the battery cell.

In an embodiment, the heat shrinkable member may be coupled to the battery cell by bonding.

In an embodiment, the heat shrinkable member may include an outer portion made of a refractory material; and a heat shrinkable frame coupled to the outer portion at an inner side of the outer portion and configured to shrink by heat.

In an embodiment, the heat shrinkable member may include an inner portion coupled to the heat shrinkable frame at an inner side of the heat shrinkable frame and made of insulating material.

In an embodiment, a gas pocket may be formed in the battery cell, and the heat shrinkable member may be coupled to the battery cell to avoid interference with the gas pocket.

In an embodiment, the heat shrinkable member may be made of polyolefin material.

In an embodiment, an upper heat shrinkable member may be coupled to an upper portion of the battery cell stack to cover the upper portion of the battery cell stack.

Meanwhile, according to another aspect of the present disclosure, there may be provided a battery pack including at least one battery module described above, and a vehicle including at least one battery module described above.

### Advantageous Effects

The embodiments of the present disclosure have the effect of protecting other battery cells in which a flame do not occur when a flame occurs in one battery cell.

In addition, the present disclosure has the effect of preventing a thermal runaway phenomenon by preventing flame chain reaction caused by flame propagation.

In addition, the present disclosure has the effect of not normally affecting a gas pocket of a battery cell.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic overall perspective view showing a battery module according to an embodiment of the present disclosure.
FIG. 2 is a schematic exploded perspective view showing the battery module according to an embodiment of the present disclosure, in which a heat shrinkable member is coupled to a battery cell.
FIG. 3 is a schematic exploded perspective view showing the battery module according to an embodiment of the present disclosure, in which the heat shrinkable member is separated from the battery cell.
FIG. 4 is a perspective view showing the battery cell in the battery module according to an embodiment of the present disclosure, in which the heat shrinkable member is separated from the battery cell.
FIG. 5 is a front view showing the battery cell in the battery module according to an embodiment of the present disclosure, in which the heat shrinkable member is coupled to the battery cell.
FIG. 6 is a perspective view of FIG. 5.
FIG. 7 is an enlarged view showing part A of FIG. 6.
FIG. 8 is a drawing showing the battery cell in the battery module according to an embodiment of the present disclosure, in which the heat shrinkable member is shrunken due to heat.
FIG. 9 is a schematic exploded perspective view showing a battery module according to a modified embodiment of FIG. 2.
FIG. 10 is a drawing schematically showing the configuration of a battery pack according to each embodiment of the present disclosure.
FIG. 11 is a drawing for explaining a vehicle including the battery pack of FIG. 10.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

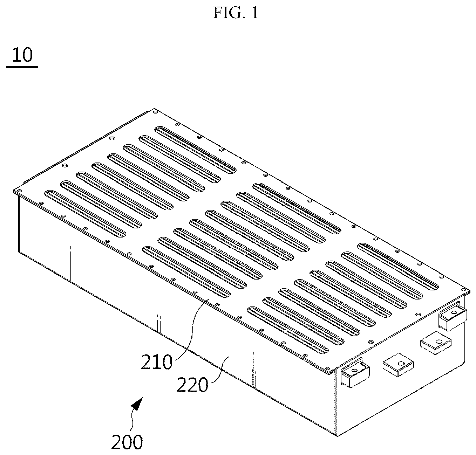

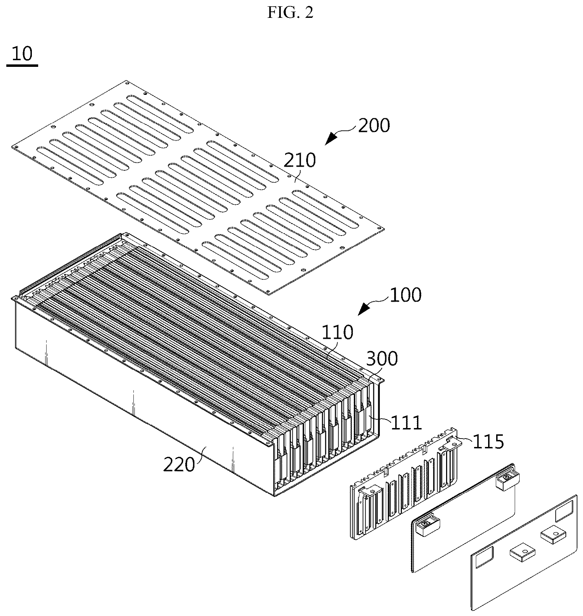

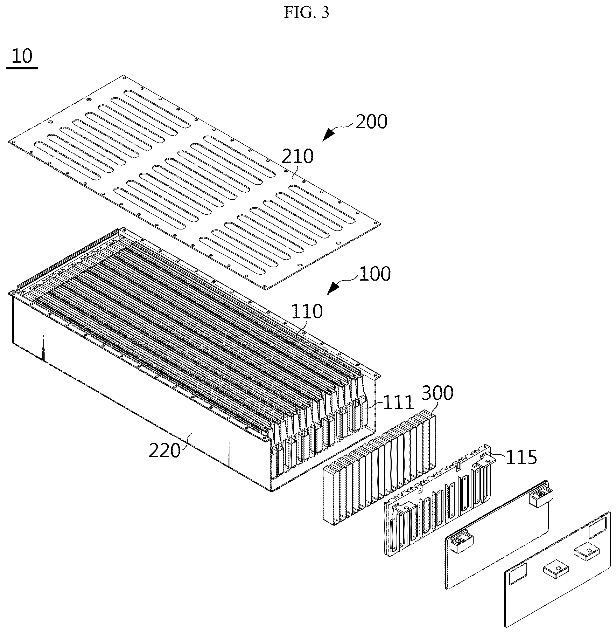

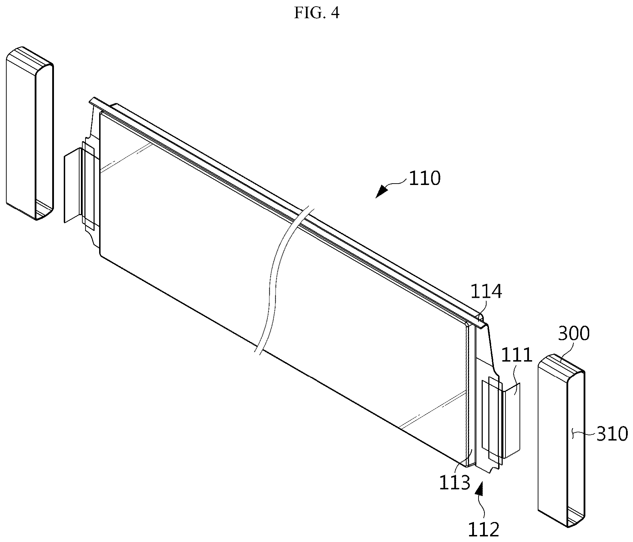

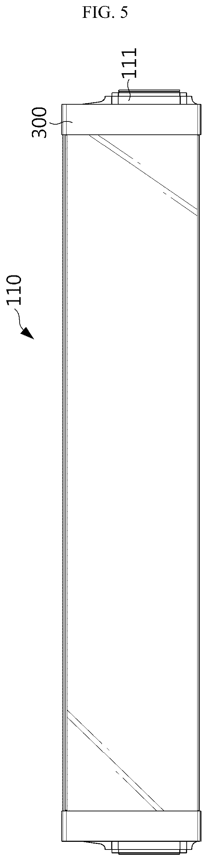

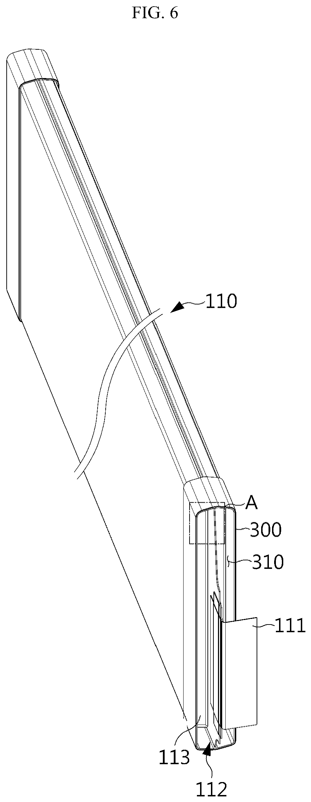

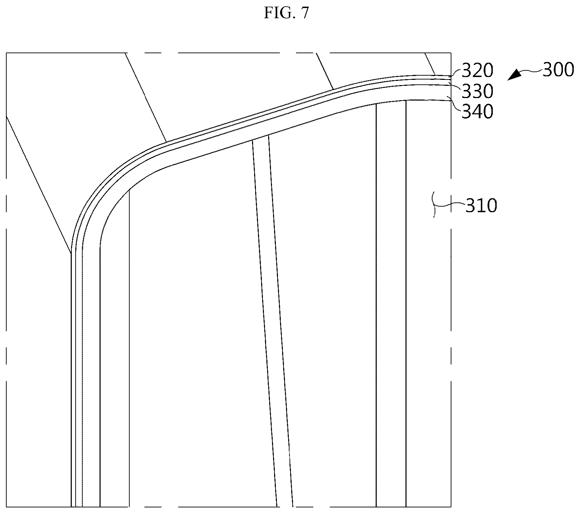

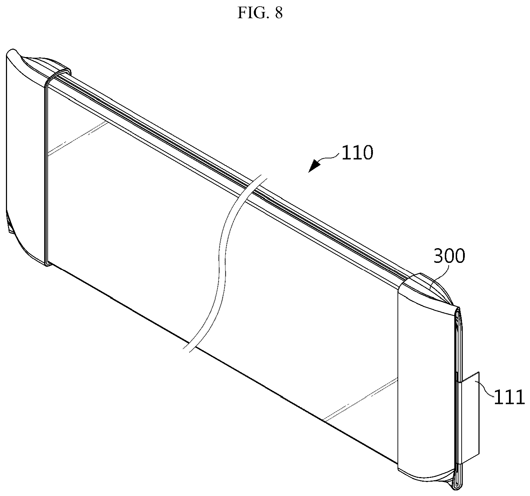

FIG. 1 is a schematic overall perspective view showing a battery module according to an embodiment of the present disclosure, FIG. 2 is a schematic exploded perspective view showing the battery module according to an embodiment of the present disclosure, in which a heat shrinkable member is coupled to a battery cell, FIG. 3 is a schematic exploded perspective view showing the battery module according to an embodiment of the present disclosure, in which the heat shrinkable member is separated from the battery cell, FIG. 4 is a perspective view showing the battery cell in the battery module according to an embodiment of the present disclosure, in which the heat shrinkable member is separated from the battery cell, FIG. 5 is a front view showing the battery cell in the battery module according to an embodiment of the present disclosure, in which the heat shrinkable member is coupled to the battery cell, FIG. 6 is a perspective view of FIG. 5, FIG. 7 is an enlarged view showing part A of FIG. 6, and FIG. 8 is a drawing showing the battery cell in the battery module according to an embodiment of the present disclosure, in which the heat shrinkable member is shrunken due to heat.

Referring to FIGS. 1 and 2, a battery module 10 according to an embodiment of the present disclosure includes a battery cell stack 100, a case 200, and a heat shrinkable member 300.

The battery cell stack 100 may be configured to stack a plurality of battery cells 110. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead 111. The electrode lead 111 is a type of terminal that is exposed to the outside and connected to an external device, and a conductive material may be used. The electrode lead 111 may include a positive electrode lead and a negative electrode lead.

The battery cell 110 may be a pouch-type battery cell 110 in which a terrace portion 112 (see FIG. 4) is formed at a portion where the electrode lead 111 is located. In addition, if the battery cell 110 is a pouch-type battery cell 110, the heat shrinkable member 300, explained later, may be coupled to the battery cell 110 at a position close to the terrace portion 112, as shown in FIG. 6.

A plurality of battery cells 110 may be electrically connected via a bus bar 115. The bus bar 115 may be formed in various shapes.

The battery cell stack 100 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

Referring to FIGS. 1 and 2 together, the battery cell stack 100 is accommodated in the case 200. The case 200 may include an upper case 210 and a lower case 220. In addition, the case 200 surrounds the battery cells 110 and thereby protects the battery cells 110 from external vibrations or shocks.

The case 200 may include a mica plate made of mica having both thermal insulation and heat resistance to prevent flame leakage. Here, the mica plate may have not only a flat mica plate shape but also a shape in which flat and curved surfaces are mixed. However, the material of the case 200 is not limited thereto.

The case 200 may be formed in a shape corresponding to the shape of the battery cell stack 100. For example, if the battery cell stack 100 is formed in a hexahedral shape with a rectangular cross-section, the case 200 may also be formed in a hexahedral shape corresponding thereto.

The case 200 may be manufactured by, for example, bending a metal plate, whereby the case 200 may be manufactured in an integral form. If the case 200 is manufactured in an integral form, the coupling process may become easy and simple. Alternatively, the case 200 may be provided in a separate form and coupled by welding, etc. However, the material of the case 200 is not limited to a metal material.

Referring to FIGS. 2, 5, and 6, the heat shrinkable member 300 is coupled to the battery cell 110 and configured to shrink by heat (see FIG. 8). The heat shrinkable member 300 may be configured to surround the electrode lead 111 and the terrace portion 112.

Referring to FIG. 4, the heat shrinkable member 300 may be formed in various shapes, for example, in a band shape. Referring to FIGS. 5 and 6, when the heat shrinkable member 300 is formed in a band shape, the heat shrinkable member 300 of the band shape may be configured to surround the perimeter of the electrode lead 111 and the terrace portion 112. Here, an open hole 310 may be formed in the heat shrinkable member 300 of the band shape so that the electrode lead 111 is exposed to the outside.

Referring again to FIG. 4, gas pockets 113 and 114 may be formed in the battery cell 110. The gas pockets 113 and 114 are portions formed to capture gas generated inside the battery cell 110.

For example, a gas pocket 113 may be formed at the inner side of the terrace portion 112 located adjacent to the electrode lead 111, or a gas pocket 114 may be formed separately at the upper side of the battery cell 110 as in FIG. 4.

Here, the heat shrinkable member 300 is configured to be coupled to the battery cell 110 to avoid interference with the gas pockets 113 and 114. If the heat shrinkable member 300 interferes with the gas pockets 113 and 114, the function of the gas pockets 113 and 114 may be degraded. Therefore, to prevent this, the heat shrinkable member 300 may be coupled to the battery cell 110 by being fitted therein so as not to interfere with the gas pockets 113 and 114. Alternatively, the heat shrinkable member 300 may be coupled to the battery cell 110 by bonding so as not to interfere with the gas pockets 113 and 114.

Accordingly, even when the heat shrinkable member 300 is coupled to the battery cell 110, a space is secured between the heat shrinkable member 300 and the battery cell 110, and thus during usual time when the battery cell 110 operates normally without generating a flame, gas is smoothly captured by the gas pockets 113 and 114.

Also, when a flame occurs in any battery cell 110, the heat shrinkable member 300 shrinks due to the heat of the flame as shown in FIG. 8, thereby surrounding the electrode lead 111 and the terrace portion 112. That is, when a flame occurs in another adjacent battery cell 110, the heat shrinkable member 300 shrinks due to the heat of the flame, thereby closing the electrode lead 111 and the terrace portion 112.

In addition, when the heat shrinkable member 300 shrinks and surrounds the electrode lead 111 and the terrace portion 112 of the battery cell 110, a flame or high-temperature gas cannot flow into the battery cell 110 (the battery cell 110 that operates normally because no flame is generated), thereby preventing flame propagation and ultimately preventing thermal runaway or explosion.

Referring to FIGS. 5 and 6, the heat shrinkable member 300 may be provided in a pair, and the pair of heat shrinkable members 300 may be coupled to both ends of the battery cell 110. However, the present disclosure is not limited thereto, and the heat shrinkable member 300 may be configured to cover the entire battery cell 110, or may be configured to cover a portion of the battery cell 110.

Referring to FIG. 7, the heat shrinkable member 300 may include an outer portion 320 and a heat shrinkable frame 330, and may further include an inner portion 340.

The outer portion 320 is located at the outer side and may be made of various types of refractory materials. If the outer portion 320 is made of a refractory material, the outer portion 320 may protect a battery cell 110 that is operating normally from a flame generated from another battery cell 110.

In addition, the heat shrinkable frame 330 is coupled to the outer portion 320 at the inner side of the outer portion 320 and is configured to shrink by heat. The heat shrinkable frame 330 may include various materials, and may be manufactured including, for example, a polyolefin material, but the material of the heat shrinkable frame 330 is not limited thereto.

Also, the inner portion 340 is coupled to the heat shrinkable frame 330 at the inner side of the heat shrinkable frame 330 and may be made of various types of insulating materials. The inner portion 340 prevents heat from the inside of the battery cell 110 from being transferred to the outside (heat conduction).

Since the heat shrinkable member 300 has the aforementioned configuration, the battery cell 110, which is normally operating, is primarily protected from an external flame (by the outer portion 320 made of a refractory material), and as the heat shrinkable frame 330 shrinks due to heat from the flame, the heat shrinkable member 300 surrounds the electrode lead 111 and the terrace portion 112, thereby preventing the flame or high-temperature gas from flowing into the battery, ultimately secondarily protecting the battery cell 110.

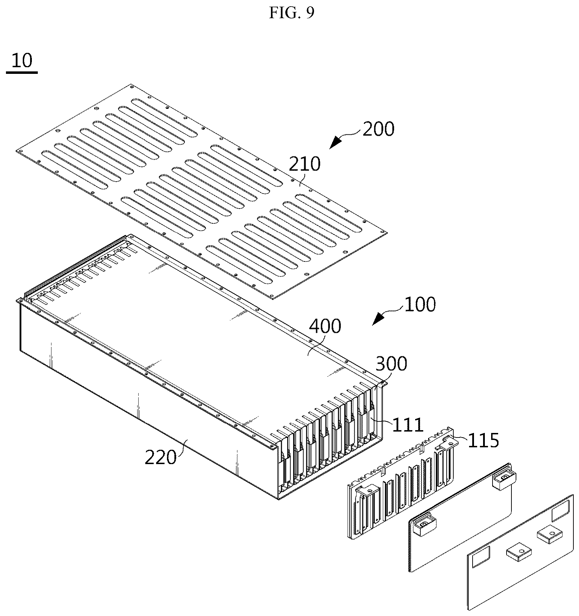

FIG. 9 is a schematic exploded perspective view showing a battery module according to a modified embodiment of FIG. 2.

The modified embodiment of FIG. 9 is structurally different from the first embodiment in that an upper heat shrinkable member 400 is coupled to the upper portion of the battery cell stack 100. However, the features of the second embodiment, which are common to the first embodiment, will not be described again in detail. In addition, the features of the second embodiment, which are applicable to the first embodiment, may be applied to the first embodiment.

Referring to FIG. 9, the upper heat shrinkable member 400 is coupled to the upper portion of the battery cell stack 100 so as to cover the upper portion of the battery cell stack 100.

The upper heat shrinkable member 400 basically has the same basic configuration and features as the heat shrinkable member 300 described above, and protects the battery cell stack 100 inside the battery module 10 that is operating normally from a flame generated from another battery module 10. A detailed description of the upper heat shrinkable member 400 is replaced with the description of the heat shrinkable member 300 described above.

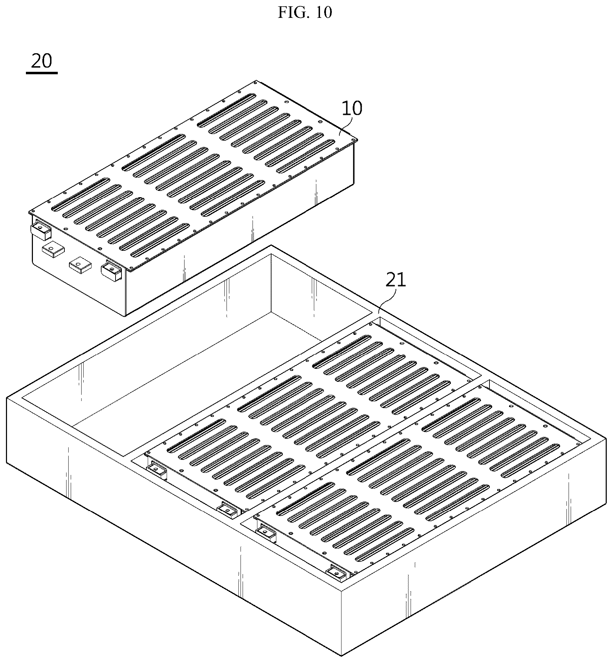

FIG. 10 is a drawing schematically showing the configuration of a battery pack according to each embodiment of the present disclosure.

Referring to FIG. 10, a battery pack 20 according to an embodiment of the present disclosure includes one or more battery modules 10 according to each embodiment described above.

In addition, the battery pack 20 may further include a pack case 21 for accommodating the battery module 10, and various devices for controlling charging and discharging of the battery cell 110 accommodated in the battery module 10, such as a BMS, a current sensor, and a fuse.

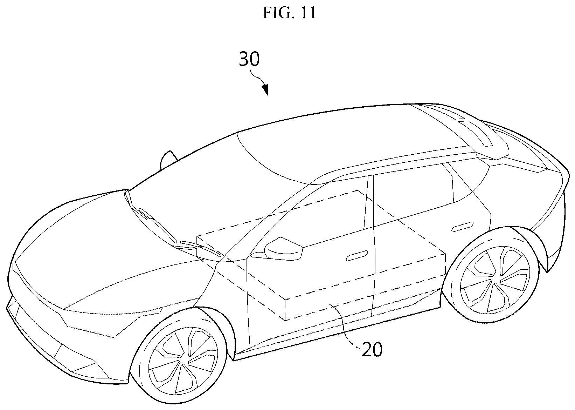

FIG. 11 is a drawing for explaining a vehicle including the battery pack of FIG. 10.

Referring to FIG. 11, a vehicle 30 according to an embodiment of the present disclosure may include one or more battery modules 10 according to each embodiment or one or more battery packs 20 according to each embodiment. Here, the vehicle 30 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including the same, and is particularly applicable to industries related to secondary batteries.

## Claims

1. A battery module comprising:
a battery cell stack in which a plurality of battery cells are stacked;
a case in which the battery cell stack is accommodated; and
a heat shrinkable member coupled to the battery cell and configured to shrink by heat.

2. The battery module according to claim 1,
wherein the battery cell is a pouch-type battery cell with a terrace portion formed at a position where an electrode lead is located, and
wherein the heat shrinkable member is coupled to the battery cell at a position close to the terrace portion.

3. The battery module according to claim 2,
wherein the heat shrinkable member surrounds the terrace portion and the electrode lead.

4. The battery module according to claim 2,
wherein the heat shrinkable member is formed in a band shape to surround a perimeter of the terrace portion, and an open hole is formed in the heat shrinkable member so that the electrode lead is exposed to an outside.

5. The battery module according to claim 2,
wherein when a flame occurs in another adjacent battery cell, the heat shrinkable member shrinks due to heat of the flame to close the terrace portion and the electrode lead.

6. The battery module according to claim 2,
wherein the heat shrinkable member is provided in a pair, and
wherein the pair of heat shrinkable members are coupled to both ends of the battery cell.

7. The battery module according to claim 1,
wherein the heat shrinkable member is fitted into and coupled to the battery cell.

8. The battery module according to claim 1,
wherein the heat shrinkable member is coupled to the battery cell by bonding.

9. The battery module according to claim 1,
wherein the heat shrinkable member includes:
an outer portion made of a refractory material; and
a heat shrinkable frame coupled to the outer portion at an inner side of the outer portion and configured to shrink by heat.

10. The battery module according to claim 9,
wherein the heat shrinkable member includes an inner portion coupled to the heat shrinkable frame at an inner side of the heat shrinkable frame and made of insulating material.

11. The battery module according to claim 1,
wherein a gas pocket is formed in the battery cell, and
wherein the heat shrinkable member is coupled to the battery cell to avoid interference with the gas pocket.

12. The battery module according to claim 1,
wherein the heat shrinkable member is made of polyolefin material.

13. The battery module according to claim 1,
wherein an upper heat shrinkable member is coupled to an upper portion of the battery cell stack to cover the upper portion of the battery cell stack.

14. A battery pack comprising at least one battery module according to any one of claims 1 to 13.

15. A vehicle comprising at least one battery module according to any one of claims 1 to 13.
